# FASCICULE DE BREVET EUROPEEN

(11) **EP 3 764 521 B1**
(45) Date de publication et mention de la délivrance du brevet: **22.11.2023**
(21) Numéro de dépôt: 20178277.8
(22) Date de dépôt: 04.06.2020
(51) Int. Cl.: H02K 7/00, H02K 7/116

(54) **MOTORISATION ELECTRIQUE POUR VEHICULE AUTOMOBILE ET PROCEDE D'USINAGE DE CARTERS**
ELEKTRISCHE MOTORISIERUNG FÜR KRAFTFAHRZEUGE UND GEHÄUSEBEARBEITUNGSVERFAHREN
ELECTRIC MOTORIZATION FOR MOTOR VEHICLE AND HOUSING MACHINING PROCESS

(30) Priorité: 12.07.2019 FR 1907850
(43) Date de publication de la demande: 13.01.2021
(73) Titulaire: Renault s.a.s, 92100 Boulogne Billancourt (FR)
(72) Inventeur: MARCHAL, Nicolas, 78330 Le Fleury (FR); MAUDET, Frederic, 91330 YERRES (FR); POMMIES, Laurent, 78160 MARLY LE ROI (FR)
(74) Mandataire: Renault Group

(56) Documents cités:
- EP-A1- 2 782 241
- EP-A2- 1 437 531
- WO-A1-2016/156272
- US-A- 5 126 609
- US-A1- 2012 060 358

## Description

La présente invention se rapporte au domaine des motorisations électriques pour véhicule automobile.

Plus précisément, elle a pour objet une motorisation électrique, comprenant une machine électrique de traction logée dans un premier carter, dont l'arbre de sortie est accouplé par une liaison cannelée avec un arbre d'entrée d'un réducteur logé dans un deuxième carter, nécessitant le centrage mutuel des deux carters.

L'invention a également pour objet un procédé d'usinage de carters de motorisation électrique comprenant une machine électrique de traction logée dans un premier carter, dont l'arbre de sortie est accouplé par une liaison cannelée avec un arbre d'entrée d'un réducteur logé dans un deuxième carter.

A la différence des motorisations thermiques, les motorisations électriques de véhicule routier ne comportent pas d'embrayage de coupure entre l'arbre de sortie de la machine de traction, et l'arbre d'entrée de la transmission. Celle-ci est le plus souvent un simple réducteur à rapport de transmission unique, de sorte que les deux arbres sont accouplés directement et en permanence l'un avec l'autre. Cette disposition simplifie l'architecture globale de la motorisation, mais se traduit par une perte de flexibilité, pour l'accouplement entre la machine et le réducteur.

Cet accouplement s'effectue par exemple, entre un arbre rotor mâle cannelé, côté machine électrique, qui vient s'insérer dans un arbre primaire cannelé femelle, côté réducteur. L'inverse est également possible. Dans les deux cas, les cannelures sont conçues pour fonctionner sur leurs flancs. Leur rôle fonctionnel est uniquement de transmettre du couple. Elles ne doivent en aucun cas servir de centreur entre les deux arbres.

Par la publication EP 1437 531, on connaît un carter de réducteur épicycloïdal présentant plusieurs portées cylindriques étagées, et son procédé d'usinage en plusieurs étapes.

L'axialité, des deux arbres ne peut pas être assurée au niveau de leur liaison d'emmanchement. Pour éviter les problèmes de bruyance, de défaillance prématurée des roulements, ou d'usure des cannelures, il est nécessaire de recourir à d'autres moyens pour assurer leur centrage.

Pour amortir les mouvements radiaux entre les arbres d'une machine électrique et d'un réducteur, et supprimer leurs défauts angulaires d'accouplement, on peut introduire une pièce intermédiaire d'accouplement entre les deux arbres. Cette solution est coûteuse, et trop encombrante pour des accouplements de motorisation électrique.

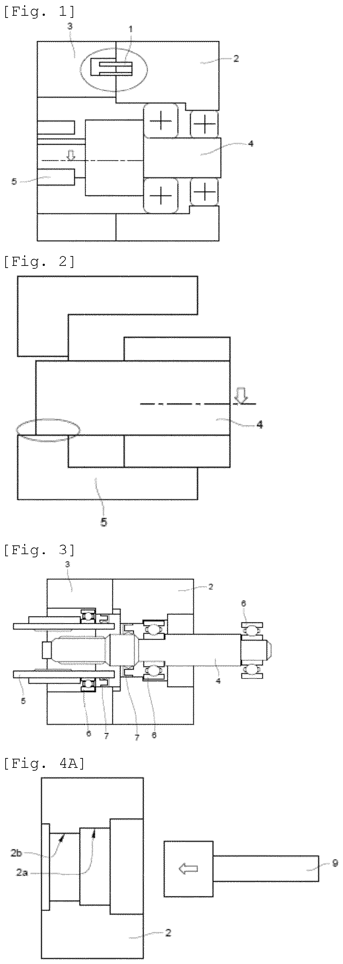

Le centrage des arbres, peut aussi être recherché en introduisant des pions cylindriques, dans les carters. Dans l'exemple illustré par la figure 1, les pions 1 sont frettés dans le carter 2, au niveau de la face de couture des deux carters 2, 3. Ils pénètrent dans des perçages de diamètre supérieur dans l'autre carter 3, où ils disposent d'un jeu de centrage. Ces aménagements sont faciles à réaliser, mais les pions sont toujours éloignés des axes des arbres. Il est difficile de les positionner avec précision par rapport à ces axes, car il faut retourner les carters, entre l'opération d'usinage des logements de pions, et l'opération d'usinage des logements de roulements.

En réalisant des portées de centrage sur les arbres eux-mêmes, comme sur la figure 2, on peut aussi améliorer considérablement leur alignement, au risque d'introduire dans la liaison un hyperstatisme générant des problèmes d'usure prématurée des roulements, qui rendent ce type de mesure inapplicable.

Le centrage des carters par les nez de carters, est encore une autre solution, illustrée par la figure 3. Le carter de machine électrique 2 est toujours à droite. Sur ce schéma, l'arbre de sortie 4 de la machine est mâle, et l'arbre d'entrée du réducteur 5 est femelle. On voit les roulements 6 de chaque arbre dans son carter, et les bagues à lèvres 7, assurant l'étanchéité des carters. Ce montage permet d'obtenir un centrage plus précis que les pions de la figure 2, car la distance entre le diamètre de centrage et les axes à aligner, est réduite.

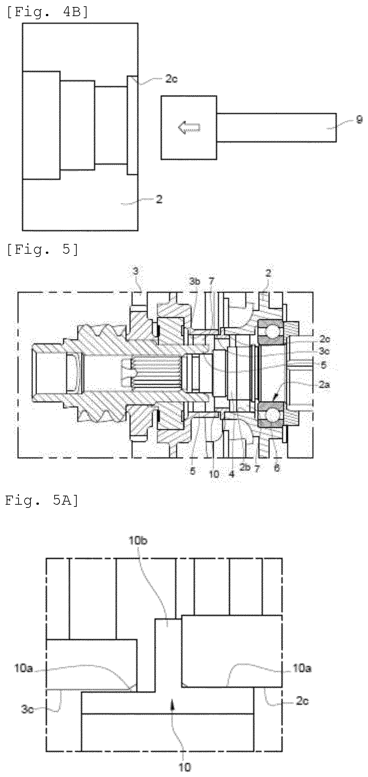

L'usinage du carter de machine électrique 2 de la figure 3 avec la fraise 9, s'effectue en deux étapes :
- étape 1 (cf. figure 4A), usinage de la partie droite du carter (portée de roulement 2a, portée de bague à lèvres 2b,
- étape 2 (cf. figure 4B), usinage de la portée de centrage 2c, après retournement.

Le retournement du carter sur la machine d'usinage, pose un problème de précision, car la localisation des surfaces issues de la deuxième étape, perdent en précision de localisation (environ 0,055mm selon les tests) par rapport aux surfaces usinées dans la première étape. La présente invention vise à se prémunir de cette imprécision, lors de l'usinage des nez de carter.

Dans ce but, un premier aspect de l'invention concerne une motorisation électrique selon la revendication 1. Celle-ci propose que chacun des deux carters présente une portée femelle de centrage engagée autour d'une pièce intermédiaire commune.

Selon l'invention, l'arbre de sortie est accouplé par une liaison cannelée avec un arbre d'entrée d'un réducteur, logé dans un deuxième carter.

De préférence, l'arbre de sortie de la machine électrique est un arbre mâle, venant s'insérer dans un arbre d'entrée femelle du réducteur.

Un second aspect de l'invention concerne un procédé d'usinage selon la revendication 8.

Conformément à l'invention, on effectue en un même passage de fraise dans un des carters, l'usinage d'une portée cylindrique femelle de centrage sur l'autre carter, et l'usinage d'une portée cylindrique de roulement de diamètre supérieur à la portée de centrage. D'autres caractéristiques et avantages de la présente invention ressortiront clairement de la lecture suivante d'un mode de réalisation non limitatif de celle-ci, en se reportant aux dessins annexés.
[Fig. 1] illustre un premier mode de centrage.
[Fig. 2] illustre un deuxième mode de centrage.
[Fig. 3] illustre un troisième mode de centrage.
[Fig. 4A] montre l'usinage du carter de machine électrique de la figure 3.
[Fig. 4B] montre aussi l'usinage du carter de machine électrique de la figure 3.
[Fig. 5] illustre l'invention.
[Fig. 5A] est un agrandissement partiel de la figure 5.

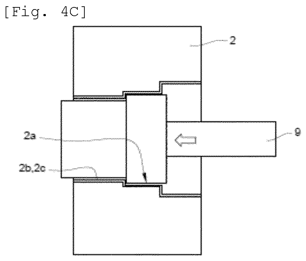

[Fig. 4C] illustre l'usinage du carter de machine électrique de la figure 5.

Sur la figure 5, on retrouve à droite la machine électrique avec son carter 2 et son arbre de sortie mâle 4, et à gauche le réducteur avec son carter 3 et son arbre primaire (arbre d'entrée) femelle 5. Dans l'exemple décrit, l'arbre de sortie de la machine électrique est un arbre mâle venant s'insérer dans un arbre d'entrée femelle, du réducteur, mais l'invention s'applique également à la disposition inverse, à savoir une sortie de machine par un arbre femelle et une entrée de réducteur par un arbre mâle.

Dans cet exemple non limitatif, l'arbre de sortie de la machine électrique est un arbre mâle 4 venant s'insérer dans un arbre d'entrée femelle 5 du réducteur. L'arbre de sortie de la machine électrique, logé dans le premier carter, est accouplé par une liaison cannelée avec l'arbre d'entrée du réducteur, logé dans un deuxième carter.

La motorisation électrique comprend une machine électrique de traction logée dans un premier carter 2, dont l'arbre de sortie 4 est accouplé par une liaison cannelée avec un arbre d'entrée 5 d'un réducteur logé dans un deuxième carter 3. Cette liaison nécessite le centrage mutuel des deux carters 2, 3. Conformément à l'invention, chacun des carters 2, 3 présente une portée femelle de centrage 2c, 3c, engagée autour d'une pièce intermédiaire d'appui 10.

Le centrage des deux carters 2, 3, est assuré par l'engagement des deux portées femelles 2c, 3c sur la pièce d'appui 10. Leur étanchéité est assurée par les joints 7, reposant sur des portées 2b, 3b des carters, qui ont le même diamètre que les portées de centrage 2c, 3c. Les joints se présentent sous la forme de bagues à lèvres. L'arbre 4 de la machine 2 est supporté par un roulement 6. Côté réducteur, on voit aussi un roulement 6, et la roue de parking 8. Le joint 7 de la machine électrique est disposé entre l'arbre 4 et la surface de centrage 2c du carter de machine 2 sur le carter de réducteur 3. La portée de joint 7 de la machine 2, a le même diamètre D que sa portée de joint. Ce diamètre est confondu avec la portée de joint dynamique de la machine électrique . Il est beaucoup plus proche de celui des arbres, que sur la figure 3. Conformément à l'invention, la portée de centrage d'un des carters (ici le carter de machine) sur l'autre, a le même diamètre que sa portée de joint d'étanchéité.

Le carter de la machine électrique et le carter du réducteur, présentent chacun une portée de centrage femelle 2c, 3c, engagée autour de la pièce intermédiaire 10. Sur le carter du réducteur, la portée de centrage 2c est confondue avec la portée du joint 2b. En revanche, sa portée de roulement 2a a un diamètre supérieur à sa portée de centrage et de joint 2b, 2c. La portée de centrage 2c du carter de machine électrique et celle du carter du réducteur 3c, sont engagées autour de la pièce d'appui intermédiaire 10.

La pièce intermédiaire 10 est une pièce cylindrique présentant deux portées mâles de centrage 10a, qui peuvent être de même diamètre. Elles sont séparées par une butée centrale annulaire 10b. La pièce 10 peut présenter une section en T. L'une ou les deux portées femelles de centrage, peuvent être frettées sur celle-ci. L'avantage de cette architecture, est qu'elle permet d'usiner la portée de centrage 2c en même temps que la portée de roulement 2a, c'est-à-dire au même passage de la fraise étagée 9, sans avoir à retourner le carter 2. Le nouveau procédé d'usinage est illustré par la figure 4C. On effectue par un même passage de fraise 9 dans un des carters 2, l'usinage d'une portée cylindrique femelle de centrage 2 sur un autre carter 3, et l'usinage d'une portée cylindrique de roulement 2a de diamètre supérieur à la portée de centrage 2.

La portée femelle de centrage et d'étanchéité, et la portée de roulement adjacente à celle-ci, sont usinées dans le carter de la machine électrique. La portée de centrage 2c du carter de la machine électrique 2 est usinée au même diamètre D que la portée 2b de son joint d'étanchéité 7. Les deux portées sont dans la continuité l'une de l'autre. La portée de joint 2b de la machine électrique est usinée dans le même passage d'outil que sa portée de centrage 2c sur le carter de réducteur 3, et que sa portée de roulement 2a.

La localisation relative de ces deux portées est assurée avec une précision correspondant aux préconisations, d'environ 0,02mm, sans subir les dispersions imposées par le retournement du carter. Enfin la nouvelle localisation de la portée de centrage et de joint, convient parfaitement pour le bon fonctionnement d'une bague à lèvre.

Le bénéfice de l'invention, peut être mis en évidence à partir de calculs de chaînes de cotes sur les carters. On constate ainsi que la nouvelle architecture permet de diviser par cinq le risque d'interférences entre les cannelures des arbres accouplés, par rapport à ces architectures plus classiques, telles que celle de la figure 1.

En conclusion, le premier avantage de l'invention est d'améliorer le centrage des carters, en évitant le retournement d'un carter dans la gamme d'usinage. Cette simplification de process, permet d'améliorer la précision de positionnement de la portée de roulements par rapport à la portée de centrage. La nouvelle méthode permet de supprimer un passage de fraise, en usinant simultanément, la portée de roulement et la surface de centrage faisant office de portée de joint, avec une fraise étagée.

## Revendications

1. Motorisation électrique pour véhicule automobile, comprenant une machine électrique de traction logée dans un premier carter (2), dont l'arbre de sortie (4) est accouplé par une liaison cannelée avec un arbre d'entrée (5) d'un réducteur logé dans un deuxième carter nécessitant le centrage mutuel des deux carters (3), **caractérisée en ce que** chacun des carters présente une portée femelle de centrage (2c, 3c) engagée autour d'une pièce d'appui commune (10) présentant deux portées mâles (10a) de centrage, de même diamètre, séparées par une butée centrale annulaire (10b).

2. Motorisation électrique selon la revendication 1, **caractérisée en ce que** l'arbre de sortie (4) de la machine électrique, est accouplé par une liaison cannelée avec un arbre d'entrée (5) d'un réducteur logé dans le deuxième carter (3).

3. Motorisation selon la revendication 1 ou 2, **caractérisée en ce que** l'étanchéité du réducteur et de la machine électrique est assurée par des joints (7) reposant sur des portées (2b, 3b,) des carters, de même diamètre que leurs portées de centrage(2c, 3c).

4. Motorisation électrique selon la revendication 2 ou 3, **caractérisé en ce que** le carter de machine électrique (2) et le carter (3) du réducteur, présentent chacun une portée de centrage (2c, 3c) femelle emmanchée sur la pièce intermédiaire d'appui (10).

5. Motorisation électrique selon l'une des revendications 1 à 4, **caractérisée en ce que** la pièce intermédiaire (10) a une section en T.

6. Motorisation électrique selon l'une des revendications 4, ou 5, **caractérisée en ce que** l'une des deux portées femelles de centrage est frettée sur la pièce intermédiaire.

7. Motorisation selon l'une des revendications 4, 5 ou 6, **caractérisée en ce que** les deux portées femelles sont frettées sur la pièce intermédiaire (10).

8. Procédé d'usinage de carters (2) d'une motorisation électrique comprenant une machine électrique de traction logée dans un premier carter (2), dont l'arbre de sortie (4) est accouplé par une liaison cannelée avec un arbre d'entrée (5) d'un réducteur logé dans un deuxième carter (3), chacun des deux carters (2, 3) présentant une portée femelle de centrage (2c, 3c) engagée autour d'une pièce d'appui commune (10) présentant deux portées mâles (10a) de centrage de même diamètre séparées par une butée centrale annulaire (10b), dans lequel on effectue dans le carter de la machine électrique (2), l'usinage de la portée cylindrique femelle de centrage (2c) sur la pièce d'appui commune (10), l'usinage d'une portée (2b) de joint d'étanchéité (7), et l'usinage d'une portée cylindrique de roulement (2a) de diamètre supérieur à la portée de centrage (2c), **caractérisé en ce que** la portée de centrage (2c) du carter de la machine électrique (2) est usinée au même diamètre (D) que sa portée (2b) de joint d'étanchéité (7).

9. Procédé d'usinage selon la revendication 8, **caractérisé en ce qu'**on usine dans le carter (2) de la machine électrique, une portée cylindrique femelle (2b, 2c)de centrage et de portée de joint sur le carter du réducteur (3), et une portée de roulement (2a) adjacente à la portée de joint et de centrage (2b, 2c).

10. Procédé d'usinage selon la revendication 8 ou 9, **caractérisé en ce que** la portée de joint (2b) de la machine électrique est usinée dans le même passage d'outil que sa portée de centrage (2c) sur le carter de réducteur (3) et sa portée de roulement (2a).

## Patentansprüche

1. Elektrische Motorisierung für ein Kraftfahrzeug, die eine elektrische Antriebsmaschine beinhaltet, die sich in einem ersten Gehäuse (2) befindet und deren Ausgangswelle (4) durch eine Keilverbindung mit einer Eingangswelle (5) eines Getriebes gekoppelt ist, das sich in einem zweiten Gehäuse befindet und eine gegenseitige Zentrierung der zwei Gehäuse (3) erfordert,
**dadurch gekennzeichnet, dass** jedes der Gehäuse eine Zentrieraufnahmefläche (2c, 3c) aufweist, die sich in Eingriff um ein gemeinsames Anlagestück (10) herum befindet, welches zwei Zentriereinsteckflächen (10a) gleichen Durchmessers aufweist, die durch einen ringförmigen mittigen Anschlag (10b) voneinander getrennt sind.

2. Elektrische Motorisierung nach Anspruch 1, **dadurch gekennzeichnet, dass** die Ausgangswelle (4) der elektrischen Maschine durch eine Keilverbindung mit einer Eingangswelle (5) eines Getriebes gekoppelt ist, das sich in dem zweiten Gehäuse (3) befindet.

3. Motorisierung nach Anspruch 1 oder 2, **dadurch gekennzeichnet, dass** die Dichtheit des Getriebes und der elektrischen Maschine durch Dichtungen (7) sichergestellt wird, die an Flächen (2b, 3b) der Gehäuse anliegen, die denselben Durchmesser wie deren Zentrierflächen (2c, 3c) aufweisen.

4. Elektrische Motorisierung nach Anspruch 2 oder 3, **dadurch gekennzeichnet, dass** das Gehäuse (2) der elektrischen Maschine und das Gehäuse (3) des Getriebes jeweils eine Aufnahmezentrierfläche (2c, 3c) aufweisen, die auf das Anlagezwischenstück (10) aufgeschoben ist.

5. Elektrische Motorisierung nach einem der Ansprüche 1 bis 4, **dadurch gekennzeichnet, dass** das Zwischenstück (10) einen T-förmigen Querschnitt aufweist.

6. Elektrische Motorisierung nach einem der Ansprüche 4 oder 5, **dadurch gekennzeichnet, dass** eine der zwei Zentrieraufnahmeflächen auf das Zwischenstück aufgeschrumpft ist.

7. Motorisierung nach einem der Ansprüche 4, 5 oder 6, **dadurch gekennzeichnet, dass** die zwei Aufnahmeflächen auf das Zwischenstück (10) aufgeschrumpft sind.

8. Verfahren zur Bearbeitung von Gehäusen (2) einer elektrischen Motorisierung, die eine elektrische Antriebsmaschine beinhaltet, die sich in einem ersten Gehäuse (2) befindet und deren Ausgangswelle (4) durch eine Keilverbindung mit einer Eingangswelle (5) eines Getriebes gekoppelt ist, das sich in einem zweiten Gehäuse (3) befindet, wobei jedes der zwei Gehäuse (2, 3) eine Zentrieraufnahmefläche (2c, 3c) aufweist, die sich in Eingriff um ein gemeinsames Anlagestück (10) herum befindet, welches zwei Zentriereinsteckflächen (10a) gleichen Durchmessers aufweist, die durch einen ringförmigen mittigen Anschlag (10b) voneinander getrennt sind,
wobei in dem Gehäuse der elektrischen Maschine (2) die Bearbeitung der zylindrischen Zentrieraufnahmefläche (2c) auf dem gemeinsamen Anlagestück (10), die Bearbeitung einer Fläche (2b) für eine Dichtung (7) und die Bearbeitung einer zylindrischen Lagerfläche (2a) mit einem Durchmesser, der größer als die Zentrierfläche (2c) ist, vorgenommen wird, **dadurch gekennzeichnet, dass** die Zentrierfläche (2c) des Gehäuses der elektrischen Maschine (2) auf denselben Durchmesser (D) wie seine Fläche (2b) für die Dichtung (7) bearbeitet wird.

9. Bearbeitungsverfahren nach Anspruch 8, **dadurch gekennzeichnet, dass** in dem Gehäuse (2) der elektrischen Maschine eine zylindrische Aufnahmefläche (2b, 2c) zur Zentrierung und als Dichtungsfläche in Bezug auf das Gehäuse des Getriebes (3) sowie eine Lagerfläche (2a) angrenzend an die Dichtungs- und Zentrierfläche (2b, 2c) bearbeitet wird.

10. Bearbeitungsverfahren nach Anspruch 8 oder 9, **dadurch gekennzeichnet, dass** die Dichtungsfläche (2b) der elektrischen Maschine in demselben Werkzeugdurchgang bearbeitet wird wie ihre Zentrierfläche (2c) in Bezug auf das Gehäuse des Getriebes (3) und ihre Lagerfläche (2a).

## Claims

1. Electric drive for a motor vehicle, comprising an electric traction machine housed in a first casing (2), the output shaft (4) of which is coupled by a splined connection to an input shaft (5) of a reduction gear housed in a second casing, requiring the mutual centring of the two casings (3), **characterized in that** each of the casings has a female centring land (2c, 3c) engaged around a common bearing part (10) having two male centring lands (10a) of the same diameter separated by an annular central stop (10b).

2. Electric drive according to Claim 1, **characterized in that** the output shaft (4) of the electric machine is coupled by a splined connection to an input shaft (5) of a reduction gear housed in the second casing (3).

3. Drive according to Claim 1 or 2, **characterized in that** the sealing of the reduction gear and of the electric machine is provided by seals (7) resting on lands (2b, 3b) of the casings having the same diameter as their centring lands (2c, 3c).

4. Electric drive according to Claim 2 or 3, **characterized in that** the electric machine casing (2) and the casing (3) of the reduction gear each have a female centring land (2c, 3c) push-fitted onto the intermediate bearing part (10).

5. Electric drive according to one of Claims 1 to 4, **characterized in that** the intermediate part (10) has a T-shaped cross section.

6. Electric drive according to either of Claims 4 and 5, **characterized in that** one of the two female centring lands is shrink-fitted onto the intermediate part.

7. Drive according to one of Claims 4, 5 and 6, **characterized in that** the two female lands are shrink-fitted onto the intermediate part (10).

8. Method for machining casings (2) of an electric drive comprising an electric traction machine housed in a first casing (2), the output shaft (4) of which is coupled by a splined connection to an input shaft (5) of a reduction gear housed in a second casing (3), each of the two casings (2, 3) having a female centring land (2c, 3c) engaged around a common bearing part (10) having two male centring lands (10a) of the same diameter separated by an annular central stop (10b), which method comprises carrying out, in the casing (2) of the electric machine, the machining of the female cylindrical centring land (2c) on the common bearing part (10), the machining of a seal (7) land (2b), and the machining of a cylindrical rolling bearing land (2a) having a greater diameter than the centring land (2c), **characterized in that** the centring land (2c) of the casing (2) of the electric machine is machined to the same diameter (D) as its seal (7) land (2b).

9. Machining method according to Claim 8, **characterized in that** there is machined, in the casing (2) of the electric machine, a female cylindrical centring and seal land (2b, 2c) on the casing (3) of the reduction gear, and a rolling bearing land (2a) adjacent to the seal and centring land (2b, 2c).

10. Machining method according to Claim 8 or 9, **characterized in that** the seal land (2b) of the electric machine is machined in the same tool pass as its centring land (2c) on the reduction gear casing (3) and its rolling bearing land (2a).
